# EUROPEAN PATENT APPLICATION

(11) **EP 4 636 660 A1**
(43) Date of publication of application: **22.10.2025**
(21) Application number: 23902617.2
(22) Date of filing: 08.12.2023
(51) Int. Cl.: G06N 20/00

(54) **MODEL SYNCHRONIZATION METHOD AND APPARATUS, AND DEVICE AND STORAGE MEDIUM**

(30) Priority: 16.12.2022 CN 202211622245
(71) Applicant: Datang Mobile Communications Equipment Co., Ltd., Beijing 100085 (CN)
(72) Inventor: YAN, Nan, Beijing 100085 (CN); WANG, Da, Beijing 100085 (CN); ZENG, Erlin, Beijing 100085 (CN); LIANG, Jing, Beijing 100085 (CN)
(74) Representative: Studio Torta S.p.A.
(86) International application number: PCT/CN2023/137609
(87) International publication number: WO 2024/125421

(57) **Abstract**

The present disclosure provides a model synchronization method and apparatus, a device and a storage medium. The method includes that a first device determines a model adjustment moment, and adjusts a first AI model to a second AI model according to the model adjustment moment. Multiple devices using the same AI model can adjust the model simultaneously, so that the AI model used at the same moment by the multiple devices using the same AI model is completely matched.

## Description

The present disclosure claims priority to Chinese patent application No. 202211622245.9, filed to China National Intellectual Property Administration on December 16, 2022 and entitled "MODEL SYNCHRONIZATION METHOD AND APPARATUS, AND DEVICE AND STORAGE MEDIUM", which is hereby incorporated by reference in its entirety.

### TECHNICAL FIELD

The present disclosure relates to the field of communication technologies and, in particular, to a model synchronization method and apparatus, a device and a storage medium.

### BACKGROUND

With the development of artificial intelligence (artificial intelligence, AI) technology and machine learning (Machine Learning, ML), AI and/or ML models (hereinafter referred to as AI models) may be used to improve the performance of communication systems.

At present, AI models may have one-sided models or two-sided models. A two-sided model refers to dividing an AI model into part A and part B, and deploying the part A and the part B on two devices respectively. The part A and the part B need to be executed together to perform a correct inference process. However, synchronous adjustment operations cannot be performed on the part A and the part B currently, which may result in a mismatch of models used by the two devices at the same moment, thereby causing inference failure.

### SUMMARY

The present disclosure relates to a model synchronization method and apparatus, a device and a storage medium.

In a first aspect, an embodiment of the present disclosure provides a model synchronization method, where the method is applied to a first device in a communication system, the communication system further includes a second device, and the method includes:
determining a model adjustment moment for the first device and the second device to perform model adjustment synchronously;
adjusting a first AI model to a second AI model according to the model adjustment moment.

In an implementation, determining the model adjustment moment includes:
acquiring model adjustment information;
determining the model adjustment moment according to the model adjustment information.

In an implementation, the model adjustment information includes: a model synchronization period and a model adjustment duration;
where determining the model adjustment moment according to the model adjustment information includes:
determining the model adjustment moment according to the model synchronization period and the model adjustment duration.

In an implementation, determining the model adjustment moment according to the model synchronization period and the model adjustment duration includes:
acquiring indication information;
determining the model adjustment moment according to the indication information, the model synchronization period and the model adjustment duration.

In an implementation, the model adjustment information includes a preset moment and an offset duration;
where determining the model adjustment moment according to the model adjustment information includes:
determining the model adjustment moment according to the preset moment and the offset duration.

In an implementation, the model adjustment information further includes: a reference time mode and/or a model synchronization time accuracy.

In an implementation, the communication system further includes a third-party management device.

In an implementation, the model adjustment information is configured by the first device, the second device, or the third-party management device;
or, the model adjustment information is determined through negotiation by the first device and the second device;
or, the model adjustment information is determined through negotiation by the third-party management device and the first device;
or, the model adjustment information is determined through negotiation by the third-party management device and the second device;
or, the model adjustment information is determined through negotiation by the third-party management device, the first device and the second device.

In an implementation, adjusting the first AI model to the second AI model includes any one of the following:
deleting the first AI model and adding the second AI model;
replacing the first AI model with the second AI model, or updating or modifying the first AI model to the second AI model;
deactivating the first AI model and activating the second AI model;
disabling the first AI model and enabling the second AI model;
enabling the second AI model;
adding the second AI model;
activating the second AI model.

In an implementation, the method further includes:
determining, according to an initial transmission moment and the model adjustment moment, the first AI model or the second AI model as a target AI model for processing first data, where the initial transmission moment is an initial transmission moment of second data, and the second data is data obtained by the target AI model after processing the first data.

In an implementation, determining, according to the initial transmission moment and the model adjustment moment, the first AI model or the second AI model as the target AI model for processing the first data includes:
if the initial transmission moment is before the model adjustment moment, determining the first AI model as the target AI model;
if the initial transmission moment is after the model adjustment moment, determining the second AI model as the target AI model.

In an implementation, the first device includes a terminal device or a network device; the second device includes a terminal device or a network device.

In an implementation, the method further includes:
receiving the second AI model sent by the second device or the third-party management device, where a reception moment of the second AI model is before the model adjustment moment or before a determination moment of the model adjustment moment.

In an implementation, the method further includes:
sending the second AI model to the second device.

In a second aspect, an embodiment of the present disclosure provides a first device, where the first device is applied to a communication system, the communication system further includes a second device, and the first device includes a memory, a transceiver and a processor;
the memory is configured to store a computer program;
the transceiver is configured to transceive data under control of the processor;
the processor is configured to read the computer program in the memory and perform the following operations:
   determining a model adjustment moment for the first device and the second device to perform model adjustment synchronously;
   adjusting a first AI model to a second AI model according to the model adjustment moment.

In an implementation, the processor is specifically configured to perform the following operations:
acquiring model adjustment information;
determining the model adjustment moment according to the model adjustment information.

In an implementation, the model adjustment information includes: a model synchronization period and a model adjustment duration;
where the processor is specifically configured to perform the following operation:
determining the model adjustment moment according to the model synchronization period and the model adjustment duration.

In an implementation, the processor is specifically configured to perform the following operations:
acquiring indication information;
determining the model adjustment moment according to the indication information, the model synchronization period and the model adjustment duration.

In an implementation, the model adjustment information includes a preset moment and an offset duration;
the processor is specifically configured to perform the following operation:
determining the model adjustment moment according to the preset moment and the offset duration.

In an implementation, the model adjustment information further includes: a reference time mode and/or a model synchronization time accuracy.

In an implementation, the communication system further includes a third-party management device.

In an implementation, the model adjustment information is configured by the first device, the second device, or the third-party management device;
or, the model adjustment information is determined through negotiation by the first device and the second device;
or, the model adjustment information is determined through negotiation by the third-party management device and the first device;
or, the model adjustment information is determined through negotiation by the third-party management device and the second device;
or, the model adjustment information is determined through negotiation by the third-party management device, the first device and the second device.

In an implementation, the processor is specifically configured to perform any one of the following operations:
deleting the first AI model and adding the second AI model;
replacing the first AI model with the second AI model, or updating or modifying the first AI model to the second AI model;
deactivating the first AI model and activating the second AI model;
disabling the first AI model and enabling the second AI model;
enabling the second AI model;
adding the second AI model;
activating the second AI model.

In an implementation, the processor is further configured to perform the following operation:
determining, according to an initial transmission moment and the model adjustment moment, the first AI model or the second AI model as a target AI model for processing first data, where the initial transmission moment is an initial transmission moment of second data, and the second data is data obtained by the target AI model after processing the first data.

In an implementation, the processor is specifically configured to perform the following operations:
if the initial transmission moment is before the model adjustment moment, determining the first AI model as the target AI model;
if the initial transmission moment is after the model adjustment moment, determining the second AI model as the target AI model.

In an implementation, the processor is further configured to perform the following operation:
receiving the second AI model sent by the second device or the third-party management device, where a reception moment of the second AI model is before the model adjustment moment or before a determination moment of the model adjustment moment.

In an implementation, the processor is further configured to perform the following operation:
sending the second AI model to the second device.

In a third aspect, an embodiment of the present disclosure provides a model synchronization apparatus, including:
a first determination unit, configured to determine a model adjustment moment for a first device and a second device to perform model adjustment synchronously;
an adjustment unit, configured to adjust a first AI model to a second AI model according to the model adjustment moment.

In an implementation, the first determination unit is specifically configured to:
acquire model adjustment information;
determine the model adjustment moment according to the model adjustment information.

In an implementation, the model adjustment information includes: a model synchronization period and a model adjustment duration; the first determination unit is specifically configured to:
determine the model adjustment moment according to the model synchronization period and the model adjustment duration.

In an implementation, the first determination unit is specifically configured to:
acquire indication information;
determine the model adjustment moment according to the indication information, the model synchronization period and the model adjustment duration.

In an implementation, the model adjustment information includes a preset moment and an offset duration; the first determination unit is specifically configured to:
determine the model adjustment moment according to the preset moment and the offset duration.

In an implementation, the model adjustment information further includes: a reference time mode and/or a model synchronization time accuracy.

In an implementation, the communication system further includes a third-party management device.

In an implementation, the model adjustment information is configured by the first device, the second device, or the third-party management device;
or, the model adjustment information is determined through negotiation by the first device and the second device;
or, the model adjustment information is determined through negotiation by the third-party management device and the first device;
or, the model adjustment information is determined through negotiation by the third-party management device and the second device;
or, the model adjustment information is determined through negotiation by the third-party management device, the first device and the second device.

In an implementation, the adjustment unit is specifically configured to implement any one of the following:
deleting the first AI model and adding the second AI model;
replacing the first AI model with the second AI model, or updating or modifying the first AI model to the second AI model;
deactivating the first AI model and activating the second AI model;
disabling the first AI model and enabling the second AI model;
enabling the second AI model;
adding the second AI model;
activating the second AI model.

In an implementation, the apparatus further includes a second determination unit, and the second determination unit is configured to:
determine, according to an initial transmission moment and the model adjustment moment, the first AI model or the second AI model as a target AI model for processing first data, where the initial transmission moment is an initial transmission moment of second data, and the second data is data obtained by the target AI model after processing the first data.

In an implementation, the second determination unit is specifically configured to:
if the initial transmission moment is before the model adjustment moment, determine the first AI model as the target AI model;
if the initial transmission moment is after the model adjustment moment, determine the second AI model as the target AI model.

In an implementation, the apparatus further includes a receiving unit, and the receiving unit is configured to:
receive the second AI model sent by the second device or the third-party management device, where a reception moment of the second AI model is before the model adjustment moment or before a determination moment of the model adjustment moment.

In an implementation, the apparatus further includes a sending unit, and the sending unit is configured to:
send the second AI model to the second device.

In a fourth aspect, an embodiment of the present disclosure provides a processor-readable storage medium, where the processor-readable storage medium stores a computer program, and the computer program is used to cause the processor to perform the method according to the first aspect.

The present disclosure provides a model synchronization method and apparatus, a device and a storage medium. In the method, all devices using the same AI model determine the model adjustment moment first, and then each device using the same AI model adjusts the first AI model to the second AI model simultaneously according to the model adjustment moment. Multiple devices using the same AI model can adjust the model simultaneously, so that the AI model used at the same moment by the multiple devices using the same AI model is completely matched.

It should be understood that the content described in the SUMMARY section is not intended to limit essential or important features of the embodiments of the present disclosure, nor is it intended to limit the scope of the present disclosure. Other features of the present disclosure will be readily understood from the following description.

### BRIEF DESCRIPTION OF THE DRAWINGS

In order to explain technical solutions in the present disclosure or in the prior art more clearly, drawings required to be used in the description of embodiments or the prior art will be introduced briefly in the following. It is obvious that the drawings in the following description are some embodiments of the present invention. For those ordinarily skilled in the art, other drawings may also be obtained according to these drawings without creative efforts.
FIG. 1 is a schematic architectural diagram of a communication system provided by an embodiment of the present disclosure.
FIG. 2 is a flowchart of a model synchronization method provided by an embodiment of the present disclosure.
FIG. 3 is flowchart I of negotiating model adjustment information provided by an embodiment of the present disclosure.
FIG. 4 is flowchart II of negotiating model adjustment information provided by an embodiment of the present disclosure.
FIG. 5 is a schematic diagram of determining a model adjustment moment provided by an embodiment of the present disclosure.
FIG. 6 is a schematic diagram of another model synchronization method provided by an embodiment of the present disclosure.
FIG. 7 is a schematic diagram of determining a target AI model provided by an embodiment of the present disclosure.
FIG. 8A is schematic structural diagram I of a first device provided by an embodiment of the present disclosure.
FIG. 8B is schematic structural diagram II of a first device provided by an embodiment of the present disclosure.
FIG. 9A is schematic structural diagram I of a model synchronization apparatus provided by an embodiment of the present disclosure.
FIG. 9B is schematic structural diagram II of a model synchronization apparatus provided by an embodiment of the present disclosure.
FIG. 9C is schematic structural diagram III of a model synchronization apparatus provided by an embodiment of the present disclosure.
FIG. 9D is schematic structural diagram IV of a model synchronization apparatus provided by an embodiment of the present disclosure.

### DESCRIPTION OF EMBODIMENTS

In the embodiments of the present disclosure, the term "and/or" describes an association relationship of associated objects, and means that there may be three types of relationships. For example, A and/or B may represent three situations, namely, A exists alone, A and B exist at the same time, and B exists alone. The character "j" generally means that the associated objects before and after the character are of an "or" relationship.

In the embodiments of the present disclosure, the term "multiple" refers to two or more, and other quantifiers are similar.

The technical solutions in the embodiments of the present disclosure will be described clearly and comprehensively in combination with accompanying drawings in the embodiments of the present disclosure. Obviously, the described embodiments are only part of the embodiments of the present disclosure, not all of them. All other embodiments obtained by those ordinarily skilled in the art based on the embodiments of the present disclosure without creative efforts fall within the protection scope of the present disclosure.

Embodiments of the present disclosure provide model synchronization methods. Multiple devices using an AI model can adjust the model simultaneously, so that the AI model used at the same moment by the multiple devices using the AI model is completely matched.

The methods and the apparatuses are based on the same application concept. Since the methods and the apparatuses solve the problems with similar principles, cross reference can be made to each other for the implementations of the apparatuses and the methods, which will not be repeated here.

The technical solutions provided by the embodiments of the present disclosure can be applied to various systems, especially a 5G system. For example, an applicable system may be a global system of mobile communication (global system of mobile communication, GSM), a code division multiple access (code division multiple access, CDMA) system, a wideband code division multiple access (wideband code division multiple access, WCDMA) general packet radio service (general packet radio service, GPRS) system, a long term evolution (long term evolution, LTE) system, an LTE frequency division duplex (frequency division duplex, FDD) system, an LTE time division duplex (time division duplex, TDD) system, a long term evolution advanced (long term evolution advanced, LTE-A) system, a universal mobile telecommunication system (universal mobile telecommunication system, UMTS), a worldwide interoperability for microwave access (worldwide interoperability for microwave access, WiMAX) system, a 5G new radio (new radio, NR) system, etc. Each of the various systems includes a terminal device and a network device. The systems may also include a core network part, such as an evolved packet system (evloved packet system, EPS), a 5G system (5GS), etc.

The terminal device involved in the embodiments of the present disclosure may refer to a device that provides voice and/or data connectivity to a user, a handheld device with a wireless connection function, or other processing devices connected to a wireless modem, etc. The terminal device may vary in name among different systems. For example, in the 5G system, the terminal device may be called a user equipment (user equipment, UE). A wireless terminal device may communicate with one or more core networks (core networks, CNs) via a radio access network (radio access network, RAN). The wireless terminal device may be a mobile terminal device, such as a mobile phone (or "cellular" phone) and a computer with a mobile terminal device. For example, the mobile terminal device may be portable, pocket-sized, handheld, computer built-in or vehicle-mounted mobile apparatuses, which exchange language and/or data with the radio access network, such as a personal communication service (personal communication service, PCS) phone, a cordless phone, a session initiated protocol (session initiated protocol, SIP) phone, a wireless local loop (wireless local loop, WLL) station, a personal digital assistant (personal digital assistant, PDA) and other devices. The wireless terminal device may also be called a system, a subscriber unit (subscriber unit), a subscriber station (subscriber station), a mobile station (mobile station), a mobile (mobile), a remote station (remote station), an access point (access point), a remote terminal device (remote terminal), an access terminal device (access terminal), a user terminal device (user terminal), a user agent (user agent), a user device (user device), which is not limited in the embodiments of the present disclosure.

The network device involved in the embodiments of the present disclosure may be an access network device or a core network device.

The access network device may be a base station, and the base station may include multiple cells providing services for terminals. Depending on specific applications, the base station may also be called an access point, or a device in an access network that communicates with a wireless terminal device through one or more sectors over an air interface, or other names. The network device may be configured to exchange a received over-the-air frame with an Internet protocol (internet protocol, IP) packet, and act as a router between the wireless terminal device and the rest of the access network, where the rest of the access network may include an Internet protocol (IP) communication network. The network device may also coordinate property management of the air interface. For example, the network device involved in the embodiments of the present disclosure may be a network device (base transceiver station, BTS) in a global system for mobile communications (global system for mobile communications, GSM) or code division multiple access (code division multiple access, CDMA), or a network device (NodeB) in wide-band code division multiple access (wide-band code division multiple access, WCDMA), or an evolutional network device (evolutional Node B, eNB or e-NodeB) in a long term evolution (long term evolution, LTE) system, or a 5G base station (gNB) in a 5G network architecture (next generation system), or may be a home evolved base station (Home evolved Node B, HeNB), a relay node (relay node), a home base station (femto), a pico base station (pico), etc., which is not limited in the embodiments of the present disclosure. In some network structures, the network device may include a centralized unit (centralized unit, CU) node and a distributed unit (distributed unit, DU) node, and the centralized unit and the distributed unit may also be geographically separated.

The core network device may include any of the following: a network data analytics function (network data analytics function, NWDAF) entity, a policy control function (policy control function, PCF) entity, an application function (application function, AF) entity, an access and mobility management function (access and mobility management function, AMF) entity, a session management function (session management function, SMF) entity, a network exposure function (network exposure function, NEF) entity, a user plane function (user plane function, UPF) entity, a unified data repository (unified data repository, UDR) entity, a network slice selection function (network slice selection function, NSSF) entity, an authentication server function (authentication server function, NSSF) entity, a unified data management (unified data management, UDM) entity, a network function repository function (network repository function, NRF) entity.

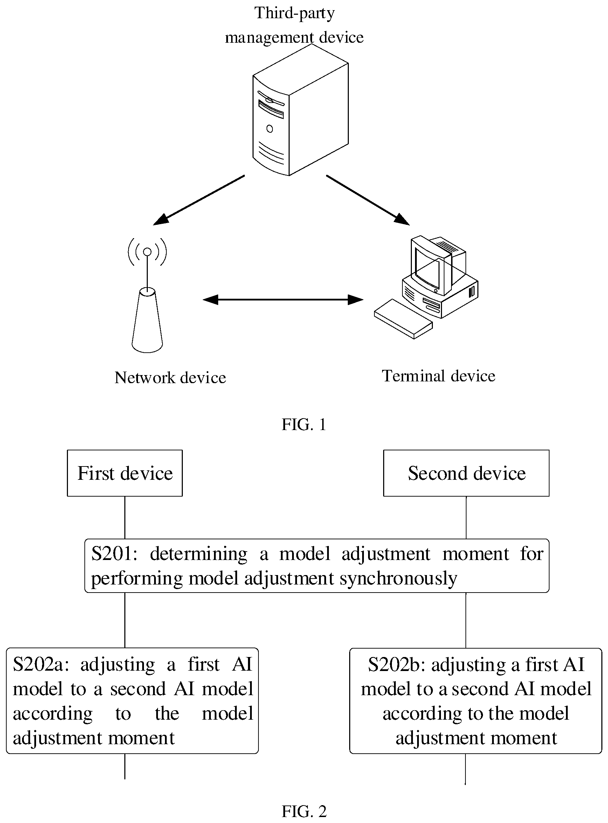

A communication scenario of the present disclosure will be described below in conjunction with FIG. 1. FIG. 1 is a schematic architectural diagram of a communication system provided by an embodiment of the present disclosure.

As shown in FIG. 1, an architecture includes a terminal device, a network device and a third-party management device. The terminal device, the network device and the third-party management device may all act as an initiator of AI model change, and the terminal device and the network device may all act as an AI model user.

In a current standard protocol, for a two-sided (two-sided) AI model, one AI model is distributed in multiple different devices to jointly complete AI model inference (model inference). However, since inference needs to be performed together on different devices, model parts of the multiple devices are required to be completely synchronized and matched, belonging to the same AI model. A current traditional radio resource control (radio resource control, RRC) signaling transmission process requires device A to send a model to another device B, or to indicate which model to apply. After receiving the signaling, the device B parses and enables the new model. For the two-sided AI model, models on both sides cannot be enabled at the same moment, which may cause the problem of model usage mismatch due to the time difference in model change/conversion processes, and ultimately lead to AI inference failure.

Based on the problems in the prior art, the present disclosure proposes the following technical concept: all devices using the same AI model first determine a model adjustment moment, and each device using the same AI model then adjusts a first AI model to a second AI model simultaneously according to the model adjustment moment. Multiple devices using the same AI model can adjust the model simultaneously, so that the AI model used at the same moment by the multiple devices using the same AI model is completely matched.

An AI model synchronization method provided by the present disclosure will be described below with reference to specific embodiments.

FIG. 2 is a flowchart of a model synchronization method provided by an embodiment of the present disclosure. As shown in FIG. 2, the method includes the following steps.

S201: determining a model adjustment moment for a first device and a second device to perform model adjustment synchronously.

The first device and the second device are devices in a communication system.

The first device may be a terminal device, or may be a network device.

The second device may be a terminal device, or may be a network device.

Both the first device and the second device may act as an initiator of model change, or may act as a model user.

The communication system may further include a third-party management device, and the third-party management device may act as an initiator of model change.

In a possible implementation, the model adjustment moment may be determined in the following manner: acquiring model adjustment information, and determining the model adjustment moment according to the model adjustment information.

In a possible implementation, the model adjustment information includes at least one of the following: a model synchronization period, a model adjustment duration, a preset moment, an offset duration, a reference time mode, a model synchronization time accuracy.

In a possible implementation, the model adjustment information may include any of the following:
the model synchronization period and the model adjustment duration;
the model synchronization period, the model adjustment duration and the preset moment;
the preset moment and the offset duration;
the model synchronization period, the model adjustment duration and the reference time mode;
the model synchronization period, the model adjustment duration and the model synchronization time accuracy;
the model synchronization period, the model adjustment duration, the reference time mode and the model synchronization time accuracy;
the preset moment, the offset duration and the reference time mode;
the preset moment, the offset duration and the model synchronization time accuracy;
the preset moment, the offset duration, the reference time mode and the model synchronization time accuracy.

The model synchronization period may be preset by an initiator of model change; or the performance of the system may be monitored by the initiator of model change, and the model synchronization period is determined according to a monitored result of the system performance. For example, if the monitored result of the system performance is relatively good, a longer model synchronization period may be set; if the monitored result of the system performance is relatively poor, a shorter model synchronization period may be set.

The model adjustment duration may refer to an offset duration between the model adjustment moment and a starting moment of the model synchronization period. In a possible implementation, the model adjustment duration is less than a duration of the model synchronization period.

The preset moment may refer to an absolute moment. The preset moment may refer to the model adjustment moment, or may refer to any absolute moment.

The offset duration may refer to an offset duration between the model adjustment moment and the preset moment.

The reference time mode refers to a reference time mode in which multiple model users perform initial time synchronization. For example, the initial time synchronization of the multiple model users may be achieved through a global positioning system (global positioning system, GPS) + universal time coordinated (universal time coordinated, UTC) mode, or a 1588 mode.

The model synchronization time accuracy may be used to decide the accuracy of the model adjustment moment. Exemplarily, the model synchronization time accuracy may be a model synchronization time accuracy at a time slot (slot) level, a model synchronization time accuracy at a subframe (subframe) level, or a model synchronization time accuracy at a frame (frame) level. Different model synchronization time accuracies may be required for model deployment of different use cases or for different AI model change operations. For example, for channel state information (channel state information, CSI) feedback, the model synchronization time accuracy at the time slot level may be required, while the model synchronization time accuracy at the frame level may be required for positioning. For another example, for replacement/activation/deactivation/update, a higher model synchronization time accuracy (such as time slot level) may be required, so that the used models are completely synchronized. For addition/deletion/modification of models, a lower model synchronization time accuracy (such as frame level) may be required, because after a model is added, an activation function with a higher model synchronization time accuracy is required to truly use the AI model.

In a possible implementation, the model adjustment information may be acquired in the following manners:
an initiator of model change configures the model adjustment information and indicates the model adjustment information to a model user; or, the initiator of model change negotiates with the model user to determine the model adjustment information.

S202a: the first device adjusts a first AI model to a second AI model according to the model adjustment moment.

In a possible implementation, an AI model may include an AI model and/or an ML model.

In a possible implementation, the first AI model may be adjusted to the second AI model in any of the following manners:
deleting the first AI model and adding the second AI model;
replacing the first AI model with the second AI model, or updating or modifying the first AI model to the second AI model;
deactivating the first AI model and activating the second AI model;
disabling the first AI model and enabling the second AI model;
enabling the second AI model;
adding the second AI model;
activating the second AI model.

In a possible implementation, the second AI model may be determined by the initiator of model change, and the second AI model is sent by the initiator of model change to the model user.

In a possible implementation, the second AI model may be determined and sent in any of the following manners:
1. The third-party management device determines the second AI model and sends the second AI model to the first device.
2. The third-party management device determines the second AI model and sends the second AI model to the second device.
3. The first device determines the second AI model and sends the second AI model to the second device.
4. The second device determines the second AI model and sends the second AI model to the first device.

For the first manner, it may be refined into any of the following manners:
1.1. The third-party management device determines the second AI model and sends the second AI model to multiple terminal devices.
1.2. The third-party management device determines the second AI model and sends the second AI model to multiple network devices.
1.3. The third-party management device determines the second AI model and sends the second AI model to multiple terminal devices and network devices.

For the refined manners of the second manner, reference can be made to the refined manners of the first manner, which will not be repeated here.

For the third manner, it may be refined into any of the following manners:
3.1. A first terminal device determines the second AI model and sends the second AI model to multiple second terminal devices;
3.2. A terminal device determines the second AI model and sends the second AI model to multiple network devices;
3.3. A first terminal device determines the second AI model and sends the second AI model to multiple second terminal devices and network devices;
3.4. A first network device determines the second AI model and sends the second AI model to multiple second network devices;
3.5. A network device determines the second AI model and sends the second AI model to multiple terminal devices;
3.6. A first network device determines the second AI model and sends the second AI model to multiple second network devices and terminal devices.

For the refined manners of the fourth manner, reference can be made to the refined manners of the third manner, which will not be repeated here.

In a possible implementation, the initiator of model change needs to determine the second AI model before the model adjustment moment; the model user needs to receive the second AI model before the model adjustment moment or before a determination moment of the model adjustment moment.

In a possible implementation, replacing the first AI model with the second AI model may refer to deleting the first AI model and adding the second AI model.

In a possible implementation, updating the first AI model to the second AI model may refer to deleting the first AI model and adding the second AI model, or may refer to adding, deleting, or modifying codes of the first AI model based on the first AI model to obtain the second AI model.

In a possible implementation, deactivating the first AI model may refer to terminating the activated state of the first AI model.

In a possible implementation, disabling the first AI model may be achieved in the following manner:
the model user disables or enables an entire AI function/use case, and since the entire AI function/use case includes one or more AI models, if the entire AI function/use case is disabled, all AI models in the entire AI function/use case are disabled, and if the entire AI function/use case is enabled, all AI models in the entire AI function/use case are enabled.

In a possible implementation, after disabling the first AI model, if the second AI model is not enabled, a traditional function may be rolled back to, such as CSI feedback (feedback) is rolled back to basic codebook parameter reporting.

In a possible implementation, each AI use case/function in the model user may include one or more AI models. Switching may be performed between multiple AI models of the same AI use case/function, and multiple or individual models may be subject to addition, deletion, modification, replacement, update, activation and/or deactivation operations.

In a possible implementation, the first device may adjust the first AI model to the second AI model at the model adjustment moment.

In a possible implementation, when to perform model adjustment may also be determined through formats/forms of intermediate data results passed by different model users. That is, a data recipient may compare a data format/form of an intermediate data result obtained by inferring using the AI model with a format/form of an intermediate data result obtained by using a traditional codebook manner, and then determine whether to perform model adjustment on the recipient according to the formats/forms of the intermediate data results of the two.

S202b: the second device adjusts a first AI model to a second AI model according to the model adjustment moment.

In a possible implementation, the first AI model in the second device and the first AI model in the first device belong to the same AI model; the second AI model in the second device and the second AI model in the first device also belong to the same AI model; it is just that each device includes a different part of the same model.

Exemplarily, in a spatial-frequency domain CSI compression (spatial-frequency domain CSI compression) sub-use case of an AI enhancement function of CSI feedback, a complete AI model consists of part A and part B. The part A of the AI model is used for encoding inference based on the AI model on a terminal device side, and the part B of the AI model is used for decoding inference based on the AI model on a network device side.

Both the first device and the second device may adjust the model according to the same model adjustment moment. That is, model users need to perform model adjustment simultaneously on different parts of the same AI model.

The model synchronization method provided by the embodiment of the present disclosure includes that: the first device determines the model adjustment moment for the first device and the second device to perform model adjustment synchronously, and adjusts the first AI model to the second AI model according to the model adjustment moment. At the same time, the second device can adjust the first AI model to the second AI model according to the model adjustment moment. That is, all devices using the same AI model first determine the model adjustment moment, and each device using the same AI model then performs model adjustment simultaneously according to the model adjustment moment, so that the AI model used at the same moment by the multiple devices using the same AI model can be completely matched.

Based on the embodiment shown in FIG. 2, how the model user acquires the model adjustment information is described in detail below.

In a possible implementation, the model adjustment information may be acquired in any of the following manners:
1. The third-party management device configures the model adjustment information, and multiple model users receive the model adjustment information sent by the third-party management device.
2. The first device configures the model adjustment information, and multiple model users receive the model adjustment information sent by the first device.
3. The second device configures the model adjustment information, and multiple model users receive the model adjustment information sent by the second device.
4. The first device and the second device negotiate the model adjustment information.
5. The third-party management device and the first device negotiate the model adjustment information.
6. The third-party management device and the second device negotiate the model adjustment information.
7. The third-party management device, the first device and the second device negotiate the model adjustment information.

The model user may be a terminal device or may be a network device.

After receiving the model adjustment information sent by the initiator of model change, the model user may also send confirmation information to the initiator of model change.

For the first manner, it may be refined into any of the following manners:
1.1. The third-party management device configures the model adjustment information, and multiple terminal devices receive the model adjustment information sent by the third-party management device.
1.2. The third-party management device configures the model adjustment information, and multiple network devices receive the model adjustment information sent by the third-party management device.
1.3. The third-party management device configures the model adjustment information, and multiple terminal devices and network devices receive the model adjustment information sent by the third-party management device.

For the second manner, it may be refined into any of the following manners:
2.1. A first network device configures the model adjustment information, and multiple second network devices receive the model adjustment information sent by the first network device.
2.2. A network device configures the model adjustment information, and multiple terminal devices receive the model adjustment information sent by the first network device.
2.3. A first network device configures the model adjustment information, and multiple terminal devices and second network devices receive the model adjustment information sent by the first network device.
2.4. A terminal device configures the model adjustment information, and multiple network devices receive the model adjustment information sent by the terminal device.
2.5. A first terminal device configures the model adjustment information, and multiple second terminal devices receive the model adjustment information sent by the first terminal device.
2.6. A first terminal device configures the model adjustment information, and multiple second terminal devices and network devices receive the model adjustment information sent by the first terminal device.

For the refined manners of the third manner, reference can be made to the refined manners of the second manner, which will not be repeated here.

For the fourth manner, it may be refined into any of the following manners:
4.1. A first terminal device and a second terminal device negotiate the model adjustment information.
4.2. A network device and a terminal device negotiate the model adjustment information.
4.3. A first network device and a second network device negotiate the model adjustment information.

For the fifth manner, it may be refined into any of the following manners:
5.1. The third-party management device and a terminal device negotiate the model adjustment information.
5.2. The third-party management device and a network device negotiate the model adjustment information.

For the refined manners of the sixth manner, reference can be made to the refined manners of the fifth manner, which will not be repeated here.

For the seventh manner, it may be refined into any of the following manners:
7.1. The third-party management device, a first terminal device and a second terminal device negotiate the model adjustment information.
7.2. The third-party management device, a first network device and a second network device negotiate the model adjustment information.
7.3. The third-party management device, a terminal device and a network device negotiate the model adjustment information.

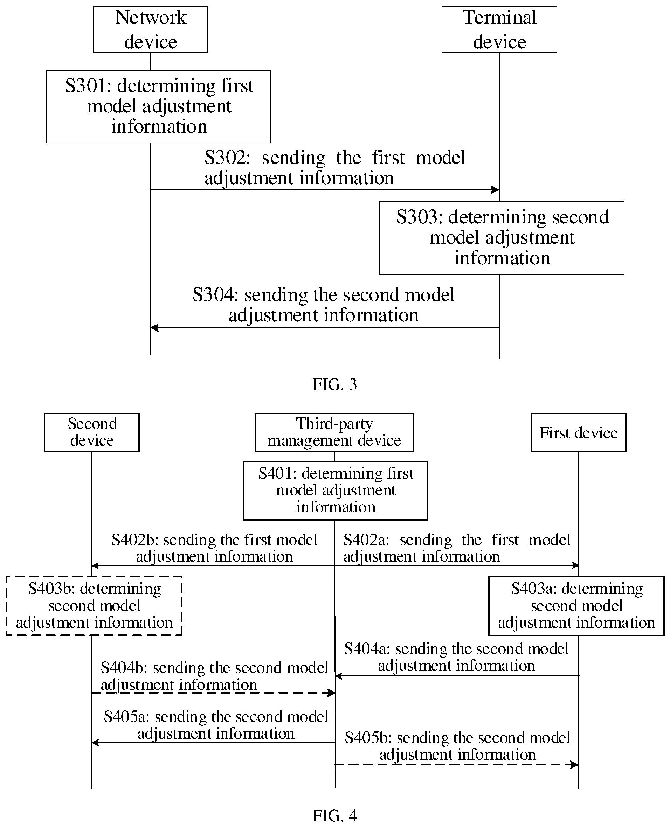

How devices negotiate the model adjustment information is described in detail below with reference to FIG. 3.

FIG. 3 is flowchart I of negotiating model adjustment information provided by an embodiment of the present disclosure. As shown in FIG. 3, taking an example where the initiator of model change is a network device and the model users are the network device and a terminal device, the method includes the following steps.

S301: the network device determines first model adjustment information.

The content of the first model adjustment information is the same as that of the model adjustment information in the embodiment shown in FIG. 2, except that the specific parameter values and/or types are different.

In order to reduce the number of negotiations and shorten a negotiation duration, the network device may determine the first model adjustment information according to the system performance.

S302: the network device sends the first model adjustment information to the terminal device.

The network device sends the first model adjustment information to the terminal device, which may also be expressed as the terminal device receiving the first model adjustment information sent by the network device.

After receiving the first model adjustment information, the terminal device may determine a first model adjustment moment according to the first model adjustment information. If the terminal device determines that it cannot perform model adjustment at the first model adjustment moment, S303 may be executed.

S303: the terminal device determines second model adjustment information.

The content of the second model adjustment information is the same as that of the first model adjustment information, except that the specific parameter values and/or types are different.

A second model adjustment moment determined according to the second model adjustment information is different from the first model adjustment moment determined according to the first model adjustment information.

S304: the terminal device sends the second model adjustment information to the network device.

The terminal device sends the second model adjustment information to the network device, which may also be expressed as the network device receiving the second model adjustment information sent by the terminal device.

After receiving the second model adjustment information, the network device may determine the second model adjustment moment according to the second model adjustment information, and perform model adjustment together with the terminal device at the second model adjustment moment.

It should be noted that the number of negotiations between the network device and the terminal device may not be limited to the number shown in the embodiment of FIG. 3.

For example, after receiving the second model adjustment information, if the network device determines that it cannot perform model adjustment at the second model adjustment moment, the network device may re-determine third model adjustment information and send the third model adjustment information to the terminal device, and so on, until the network device and the terminal device obtain, by negotiation, the model adjustment information recognized by both parties. However, in order to reduce the negotiation duration, the number of negotiations should be minimized as much as possible.

For the manners of negotiating the model adjustment information between the devices listed in the above manners 4, 5 and 6, reference can be made to the negotiation manner shown in the embodiment of FIG. 3.

How the third-party management device, the first device and the second device negotiate the model adjustment information is described in detail below with reference to FIG. 4.

FIG. 4 is flowchart II of negotiating model adjustment information provided by an embodiment of the present disclosure. As shown in FIG. 4, the method includes the following steps.

S401: the third-party management device determines first model adjustment information.

The content of the first model adjustment information is the same as that of the model adjustment information in the embodiment shown in FIG. 2, except that the specific parameter values and/or types are different.

In order to reduce the number of negotiations and shorten a negotiation duration, the third-party management device may determine the first model adjustment information according to the system performance.

S402: the third-party management device sends the first model adjustment information to the first device and the second device respectively.

The third-party management device sends the first model adjustment information to the first device and the second device respectively, which may also be expressed as the first device receiving the first model adjustment information sent by the third-party management device, and the second device receiving the first model adjustment information sent by the third-party management device.

After receiving the first model adjustment information, the first device and the second device may determine a first model adjustment moment according to the first model adjustment information. If the first device (or the second device) determines that it cannot perform model adjustment at the first model adjustment moment, S403 may be executed.

S403: the first device (or the second device) determines second model adjustment information.

The content of the second model adjustment information is the same as that of the first model adjustment information, except that the specific parameter values and/or types are different.

A second model adjustment moment determined according to the second model adjustment information is different from the first model adjustment moment determined according to the first model adjustment information.

S404: the first device (or the second device) sends the second model adjustment information to the third-party management device.

The first device (or the second device) sends the second model adjustment information to the third-party management device, which may also be expressed as the third-party management device receiving the second model adjustment information sent by the first device (or the second device).

S405: the third-party management device sends the second model adjustment information to the second device (or the first device).

The third-party management device sends the second model adjustment information to the second device (or the first device), which may also be expressed as the second device (or the first device) receiving the second model adjustment information sent by the third-party management device.

After receiving the second model adjustment information, the second device (or the first device) may determine the second model adjustment moment according to the second model adjustment information, and perform model adjustment together with the first device (or the second device) at the second model adjustment moment.

In a possible implementation, before performing AI model synchronization, multiple devices using the same AI model may perform network synchronization first, and then data transmission can be performed normally. That is, effective AI model synchronization can be performed subsequently only on the basis of network synchronization.

For the manner of network synchronization, reference can be made to the manners in the prior art, which will not be repeated here.

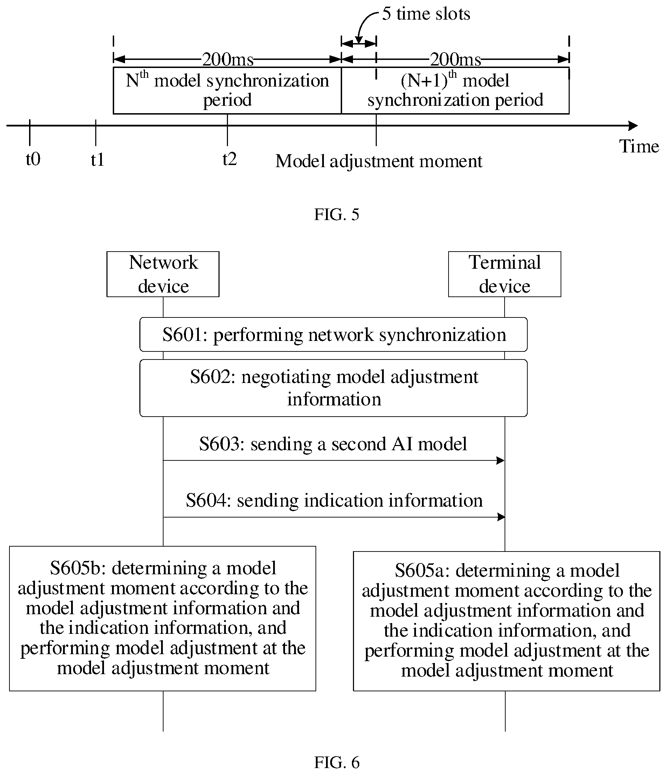

Based on any of the above embodiments, how to determine the model adjustment moment according to the model adjustment information is described in detail below with reference to FIG. 5 and FIG. 6.

In a possible implementation, the model adjustment moment may be determined according to the model synchronization period and the model adjustment duration.

In a possible implementation, a starting moment of the model synchronization period may be determined, and the model adjustment moment is determined according to the starting moment of the model synchronization period and the model adjustment duration. If the starting moment of the model synchronization period is ts and the model adjustment duration is TL, then the model adjustment moment is ts+TL.

In a possible implementation, the starting moment of the model synchronization period may be determined according to a reception moment of the second AI model; the starting moment of the model synchronization period may also be determined according to a reception moment of the model adjustment information; and the starting moment of the model synchronization period may also be indicated by the initiator of model change.

In a possible implementation, the model adjustment moment may be determined in the following manner:
the initiator of model change sends indication information to the model user, and the model user determines the model adjustment moment according to the indication information, the model synchronization period and the model adjustment duration.

In a possible implementation, the model user may determine a target model synchronization period according to the indication information and the model synchronization period, and determine the model adjustment moment according to a starting moment of the target model synchronization period and the model adjustment duration.

The target model synchronization period may refer to a period during which model adjustment is performed.

For example, the model user may determine N (N > 0) model synchronization periods according to the model synchronization period, and may determine N candidate model adjustment moments according to the N model synchronization periods and the model adjustment duration. If the indication information is received in the i^{th} model synchronization period, and a reception moment of the indication information is before the i^{th} candidate model adjustment moment, then the i^{th} model synchronization period may be determined as the target model synchronization period, the i^{th} candidate model adjustment moment may be determined as a target model adjustment moment, and model adjustment is performed at the target model adjustment moment. If the reception moment of the indication information is after the i^{th} candidate model adjustment moment, then the (i+1)^{th} model synchronization period may be determined as the target model synchronization period, the i^{th} candidate model adjustment moment may be determined as the target model adjustment moment, and model adjustment is performed at the target model adjustment moment, where i = 1, 2, ... N.

For ease of understanding, how to determine the model adjustment moment is described in detail below with reference to FIG. 5.

FIG. 5 is a schematic diagram of determining a model adjustment moment provided by an embodiment of the present disclosure. As shown in FIG. 5, an example where a network device is the initiator of model change and a terminal device is the model user is taken. The terminal device and the network device perform network synchronization at moment t0, then the terminal device receives model adjustment information sent by the network device at moment t1. The model adjustment information includes a model adjustment period, a model adjustment duration and a model synchronization time accuracy. The model adjustment period is 200ms, the model adjustment duration is 5 time slots, and the model synchronization time accuracy is at the time slot level. The terminal device determines multiple model change periods according to the model adjustment information. If the terminal device receives a second AI model or indication information sent by the network device at moment t2, and moment t2 is within the N^{th} model adjustment period, then a first AI model may be adjusted to the second AI model in the (N+1)^{th} model adjustment period. A specific model adjustment moment may be confirmed according to a starting moment of the (N+1)^{th} model adjustment period and the model adjustment duration, where N>0.

In a possible implementation, the model adjustment duration may be 0, or may be greater than 0. If the model adjustment duration is 0, it indicates that model adjustment is performed at a boundary of the model synchronization period. If the model adjustment duration is greater than 0, it indicates that model adjustment is performed during the model adjustment period.

For ease of understanding, a specific example is provided in the following to illustrate the model synchronization process in detail.

FIG. 6 is a schematic diagram of another model synchronization method provided by an embodiment of the present disclosure. As shown in FIG. 6, taking an example where a network device serves as the initiator of model change and a terminal device and the network devices serve as the model users as an example, the method includes the following steps.

S601: the network device and the terminal device perform network synchronization.

S602: the network device and the terminal device negotiate model adjustment information.

The model adjustment information includes a model synchronization period and a model adjustment duration.

For the manner of negotiating the model adjustment information, reference can be made to the above embodiments, which will not be repeated here.

S603: the network device sends a second AI model to the terminal device.

S604: the network device sends indication information to the terminal device.

The indication information is used to indicate that model adjustment can be started.

S605: the network device and the terminal device determine a model adjustment moment according to the model adjustment information and the indication information, and perform model adjustment at the model adjustment moment.

For the manner of determining the model adjustment moment, reference can be made to the above embodiments, which will not be repeated here.

In a possible implementation, the model users may determine the model adjustment moment according to a preset moment and an offset duration.

In a possible implementation, the offset duration may be 0, or may be greater than 0.

When the offset duration is 0, it indicates that the preset moment may be directly used as the model adjustment moment. When the offset duration is greater than 0, it indicates that a moment that is offset by the offset duration after the preset moment is used as the model adjustment moment.

For example, if the preset moment is t and the offset duration is T, then the model adjustment moment is t+T.

Based on any of the above embodiments, how each model user determines a target AI model to be used is described in detail below.

In a possible implementation, the model user may determine a target AI model for processing first data according to an initial transmission moment and the model adjustment moment, where the initial transmission moment is an initial transmission moment of second data, and the second data is data obtained by the target AI model after processing the first data.

In a possible implementation, the model user may determine the first AI model or the second AI model as the target AI model for processing the first data according to the initial transmission moment and the model adjustment moment. If the initial transmission moment is before the model adjustment moment, the first AI model is determined as the target AI model. If the initial transmission moment is after the model adjustment moment, the second AI model is determined as the target AI model.

In a possible implementation, if the initial transmission moment is before the model adjustment moment, regardless of whether the second data is initial transmission or retransmission, the model user uses the first AI model as the target AI model. If the initial transmission moment is after the model adjustment moment, regardless of whether the second data is initial transmission or retransmission, the model user uses the second AI model as the target AI model.

If a physical uplink control channel (physical uplink control channel, PUCCH) is used to transmit the second data from the terminal device to the network device, there is only initial transmission and no retransmission. It can be considered that sending by the terminal device and receiving by the network device are completed within one time slot.

If a physical uplink shared channel (physical uplink shared channel, PUSCH) is used to transmit the second data from the terminal device to the network device, retransmission may occur. At this time, it is necessary to determine the initial transmission moment first, and then determine the target AI model for processing the first data according to the initial transmission moment and the model adjustment moment.

For example, in a CSI feedback use case, the terminal device performs an encoding operation based on AI model inference and sends an inferred intermediate data result (second data) to the network device, and the network device performs a decoding operation based on AI model inference.

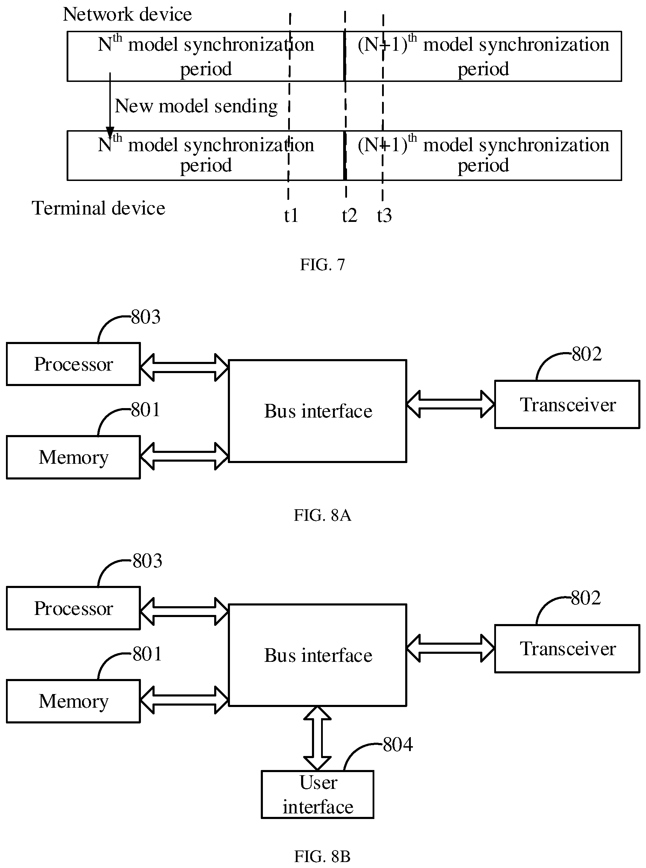

When the recipient receives the second data, it is necessary to infer the AI model used by the sender during encoding. First, it is necessary to determine an initial transmission moment of second data related information on the terminal device side (since both retransmission and initial transmission are scheduled by the network device side, the network device side can know the initial transmission moment), so as to determine the AI model used for encoding on the terminal device side. That is, if the inferred initial transmission moment is before the model adjustment moment, even if the model adjustment moment has been reached and thus an old AI model (the first AI model) is adjusted to a new AI model (the second AI model), the old AI model still needs to be used for decoding. Therefore, it is necessary for the network device to temporarily save information of the previous used AI model (the old AI model) after model adjustment. As shown in FIG. 7, the terminal device uses the old AI model to perform inference on the first data to obtain the second data, and transmits the second data to the network device for the first time at moment t1. The network device decodes the initially transmitted second data at moment t1, and decoding fails. Moment t2 is the model adjustment moment. Both the network device and the terminal device adjust the old AI model to the new AI model at moment t2, and the network device also needs to save the old AI model. The terminal device repeats the transmission of the second data to the network device at moment t3, and the network device uses the old AI model to perform inference on the retransmitted second data at moment t3.

When the sender uses an AI model to infer the second data to be sent, if it is determined that the initial transmission is initiated after the model adjustment moment, even if the encoding occurs before the model adjustment moment, an AI model inference operation for encoding needs to be performed according to a next new AI model.

Determining the target AI model accurately can ensure that the models used by model users are completely matched.

FIG. 8A is schematic structural diagram I of a first device provided by an embodiment of the present disclosure. As shown in FIG. 8A, the first device includes: a memory 801, a transceiver 802 and a processor 803.

The memory 801 is configured to store a computer program;
the transceiver 802 is configured to transceive data under control of the processor 803;
the processor 803 is configured to read the computer program in the memory 801 and perform the following operations:
   determining a model adjustment moment for the first device and a second device to perform model adjustment synchronously;
   adjusting a first AI model to a second AI model according to the model adjustment moment.

In an implementation, the processor 803 is specifically configured to perform the following operations:
acquiring model adjustment information;
determining the model adjustment moment according to the model adjustment information.

In an implementation, the model adjustment information includes: a model synchronization period and a model adjustment duration;
the processor 803 is specifically configured to perform the following operation:
determining the model adjustment moment according to the model synchronization period and the model adjustment duration.

In an implementation, the processor 803 is specifically configured to perform the following operations:
acquiring indication information;
determining the model adjustment moment according to the indication information, the model synchronization period and the model adjustment duration.

In an implementation, the model adjustment information includes a preset moment and an offset duration;
the processor 803 is specifically configured to perform the following operation:
determining the model adjustment moment according to the preset moment and the offset duration.

In an implementation, the model adjustment information further includes: a reference time mode and/or a model synchronization time accuracy.

In an implementation, a communication system further includes a third-party management device.

In an implementation, the model adjustment information is configured by the first device, the second device, or the third-party management device;
or, the model adjustment information is determined through negotiation by the first device and the second device;
or, the model adjustment information is determined through negotiation by the third-party management device and the first device;
or, the model adjustment information is determined through negotiation by the third-party management device and the second device;
or, the model adjustment information is determined through negotiation by the third-party management device, the first device and the second device.

In an implementation, the processor 803 is specifically configured to perform any of the following operations:
deleting the first AI model and adding the second AI model;
replacing the first AI model with the second AI model, or updating or modifying the first AI model to the second AI model;
deactivating the first AI model and activating the second AI model;
disabling the first AI model and enabling the second AI model;
enabling the second AI model;
adding the second AI model;
activating the second AI model.

In an implementation, the processor 803 is further configured to perform the following operation:
determining a target AI model for processing first data according to an initial transmission moment and the model adjustment moment, where the initial transmission moment is an initial transmission moment of second data, and the second data is data obtained by the target AI model after processing the first data.

In an implementation, the processor is specifically configured to perform the following operations:
if the initial transmission moment is before the model adjustment moment, determining the first AI model as the target AI model;
if the initial transmission moment is after the model adjustment moment, determining the second AI model as the target AI model.

In an implementation, the processor 803 is further configured to perform the following operation:
receiving the second AI model sent by the second device or the third-party management device, where a reception moment of the second AI model is before the model adjustment moment or before a determination moment of the model adjustment moment.

In an implementation, the processor 803 is further configured to perform the following operation:
sending the second AI model to the second device.

In FIG. 8A, a bus architecture may include any number of interconnected buses and bridges, and specifically, various circuits of one or more processors represented by the processor 803 and a memory represented by the memory 801 are linked together. The bus architecture may also link various other circuits, such as a peripheral device, a voltage regulator, a power management circuit and the like, which are well known in the art and will thus not be further described here. A bus interface provides an interface. The transceiver 802 may be multiple elements, including a transmitter and a receiver, and provide a unit for communication with various other apparatuses on transmission media. These transmission media include a wireless channel, a wired channel, an optical cable and other transmission media. The processor 803 is responsible for managing the bus architecture and general processing, and the memory 801 can store data used by the processor 803 when executing operations.

FIG. 8B is schematic structural diagram II of a first device provided by an embodiment of the present disclosure. As shown in FIG. 8B, when the first device is a terminal device, the device may further include a user interface 804. For different terminal devices, the user interface 804 may also be an interface that can be connected externally/internally to a required device, and the connected device includes, but is not limited to, a keypad, a display, a speaker, a microphone, a joystick, etc.

Optionally, the processor 803 may be a central processing unit (central processing unit, CPU), an application specific integrated circuit (application specific integrated circuit, ASIC), a field-programmable gate array (field-programmable gate array, FPGA), or a complex programmable logic device (complex programmable logic device, CPLD), and the processor may also adopt a multi-core architecture.

By calling the computer program stored in the memory 801, the processor 803 is configured to execute any of the methods provided by the embodiments of the present disclosure in accordance with obtained executable instructions. The processor 803 and the memory 801 may also be physically separated.

It should be noted here that the above first device provided by the present disclosure can implement all the method steps implemented by the first device in the above method embodiments, and can achieve the same technical effects. The part of this embodiment which is same as the method embodiments and the beneficial effects thereof will not be described in detail here.

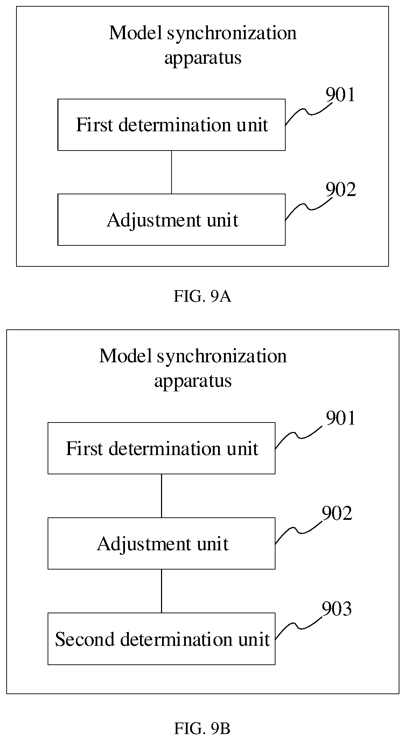

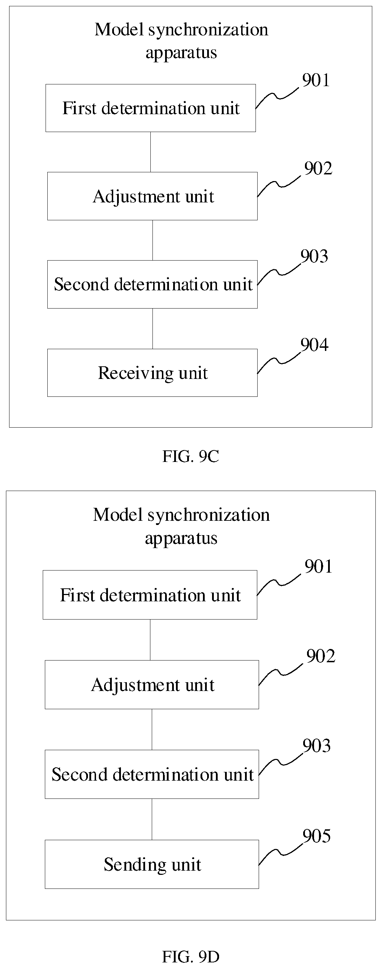

FIG. 9A is schematic structural diagram I of a model synchronization apparatus provided by an embodiment of the present disclosure. As shown in FIG. 9, the apparatus includes:
a first determination unit 901, configured to determine a model adjustment moment for a first device and a second device to perform model adjustment synchronously;
an adjustment unit 902, configured to adjust a first AI model to a second AI model according to the model adjustment moment.

In an implementation, the first determination unit 901 is specifically configured to:
acquire model adjustment information;
determine the model adjustment moment according to the model adjustment information.

In an implementation, the model adjustment information includes: a model synchronization period and a model adjustment duration; the first determination unit 901 is specifically configured to:
determine the model adjustment moment according to the model synchronization period and the model adjustment duration.

In an implementation, the first determination unit 901 is specifically configured to:
acquire indication information;
determine the model adjustment moment according to the indication information, the model synchronization period and the model adjustment duration.

In an implementation, the model adjustment information includes a preset moment and an offset duration; the first determination unit 901 is specifically configured to:
determine the model adjustment moment according to the preset moment and the offset duration.

In an implementation, the model adjustment information further includes: a reference time mode and/or a model synchronization time accuracy.

In an implementation, a communication system further includes a third-party management device.

In an implementation, the model adjustment information is configured by the first device, the second device, or the third-party management device;
or, the model adjustment information is determined through negotiation by the first device and the second device;
or, the model adjustment information is determined through negotiation by the third-party management device and the first device;
or, the model adjustment information is determined through negotiation by the third-party management device and the second device;
or, the model adjustment information is determined through negotiation by the third-party management device, the first device and the second device.

In an implementation, the adjustment unit 902 is specifically configured to implement any one of the following:
deleting the first AI model and adding the second AI model;
replacing the first AI model with the second AI model, or updating or modifying the first AI model to the second AI model;
deactivating the first AI model and activating the second AI model;
disabling the first AI model and enabling the second AI model;
enabling the second AI model;
adding the second AI model;
activating the second AI model.

FIG. 9B is schematic structural diagram II of a model synchronization apparatus provided by an embodiment of the present disclosure. As shown in FIG. 9B, the apparatus further includes a second determination unit 903, and the second determination unit 903 is configured to:
determine a target AI model for processing first data according to an initial transmission moment and the model adjustment moment, where the initial transmission moment is an initial transmission moment of second data, and the second data is data obtained by the target AI model after processing the first data.

In an implementation, the second determination unit 903 is specifically configured to:
if the initial transmission moment is before the model adjustment moment, determine the first AI model as the target AI model;
if the initial transmission moment is after the model adjustment moment, determine the second AI model as the target AI model.

FIG. 9C is schematic structural diagram III of a model synchronization apparatus provided by an embodiment of the present disclosure. As shown in FIG. 9C, the apparatus further includes a receiving unit 904, and the receiving unit 904 is configured to:
receive the second AI model sent by the second device or the third-party management device, where a reception moment of the second AI model is before the model adjustment moment or before a determination moment of the model adjustment moment.

FIG. 9D is schematic structural diagram IV of a model synchronization apparatus provided by an embodiment of the present disclosure. As shown in FIG. 9D, the apparatus further includes a sending unit 905, and the sending unit 905 is configured to:
send the second AI model to the second device.

It should be noted that a division of units in the embodiments of the present disclosure is schematic and is only a logical function division, and there may be other division manners in actual implementation. In addition, the functional units in the embodiments of the present disclosure may be integrated in one processing unit, or each unit may exist physically alone, or two or more units may be integrated in one unit. The above-mentioned integrated unit may be implemented in a form of hardware, or may be implemented in a form of a software functional unit.

If implemented in the form of the software functional unit and sold or used as an independent product, the integrated unit may be stored in a processor-readable storage medium. Based on this understanding, a technical solution of the present disclosure essentially or a part thereof that contributes to the prior art or all or part of the technical solution can be embodied in a form of a software product. The computer software product is stored in a storage medium and includes several instructions for making a computer device (which may be a personal computer, a server, or a network device, etc.) or a processor (processor) execute all or part of steps of the methods in the embodiments of the present disclosure. The aforementioned storage medium includes: a USB flash disk, a mobile hard disk, a read-only memory (read-only memory, ROM), a random access memory (random access memory, RAM), a magnetic disk, an optical disk or other media that can store program codes.

It should be noted here that the above apparatuses provided by the present disclosure can implement all the method steps implemented by the above method embodiments, and can achieve the same technical effects. The part of this embodiment which is same as the method embodiments and the beneficial effects thereof will not be described in detail here.

An embodiment of the present disclosure further provides a processor-readable storage medium, where the processor-readable storage medium stores a computer program, and the computer program is used to cause a processor to execute the method in any of the above method embodiments.

The processor-readable storage medium may be any available medium or data storage device that the computer can access, including but not limited to, a magnetic memory (such as a floppy disk, a hard disk, a magnetic tape, a magneto-optical disk (MO), etc.), an optical memory (such as a CD, a DVD, a BD, an HVD, etc.), and a semiconductor memory (such as a ROM, an EPROM, an EEPROM, a non-volatile memory (NAND FLASH), a solid state disk (SSD)), etc.

An embodiment of the present disclosure further provides a computer program product including a computer program, and when the computer program is executed by a processor, the method in any of the above method embodiments is implemented.

It should be understood by those skilled in the art that the embodiments of the present disclosure can be provided as methods, systems or computer program products. Therefore, the present disclosure may take forms of entire-hardware embodiments, entire-software embodiments, or embodiments combining software and hardware aspects. Furthermore, the present disclosure may take a form of a computer program product implemented on one or more computer-usable storage media (including but not limited to a magnetic disk storage, an optical storage, etc.) in which computer-usable program codes are included.

The present disclosure is described with reference to flowcharts and/or block diagrams of methods, devices (systems) and computer program products according to the embodiments of the present disclosure. It should be understood that each flow and/or block in the flowcharts and/or block diagrams, and a combination of flows and/or blocks in the flowcharts and/or block diagrams may be implemented by computer-executable instructions. These computer-executable instructions may be provided to a processor of a general-purpose computer, a special-purpose computer, an embedded processor or other programmable data processing devices to produce a machine, so that an apparatus for implementing functions specified in one or more flows of the flowcharts and/or one or more blocks of the block diagrams is produced by instructions executed by the processor of the computer or other programmable data processing devices.

These processor-executable instructions may also be stored in a processor-readable memory that can guide a computer or other programmable data processing devices to work in a specific way, so that the instructions stored in the processor-readable memory produce a manufactured product including an instruction apparatus, and the instruction apparatus implements functions specified in one or more flows of the flowcharts and/or one or more blocks of the block diagrams.

These processor-executable instructions may also be loaded on a computer or other programmable data processing devices, so that a series of operation steps are executed on the computer or other programmable devices to produce computer-implemented processing, whereby the instructions executed on the computer or other programmable devices provide steps for implementing functions specified in one or more flows of the flowcharts and/or one or more blocks of the block diagrams.

Obviously, those skilled in the art can make various modifications and variations to the present disclosure without departing from the spirit and scope of the present disclosure. Thus, if these modifications and variations of the present disclosure are within the scope of claims of the present disclosure and their equivalent technology, the present disclosure is also intended to include these modifications and variations.

## Claims

1. A model synchronization method, **characterized in that** the method is applied to a first device in a communication system, the communication system further comprises a second device, and the method comprises:
determining a model adjustment moment for the first device and the second device to perform model adjustment synchronously;
adjusting a first AI model to a second AI model according to the model adjustment moment.

2. The method according to claim 1, wherein determining the model adjustment moment comprises:
acquiring model adjustment information;
determining the model adjustment moment according to the model adjustment information.

3. The method according to claim 2, wherein the model adjustment information comprises: a model synchronization period and a model adjustment duration;
wherein determining the model adjustment moment according to the model adjustment information comprises:
determining the model adjustment moment according to the model synchronization period and the model adjustment duration.

4. The method according to claim 3, wherein determining the model adjustment moment according to the model synchronization period and the model adjustment duration comprises:
acquiring indication information;
determining the model adjustment moment according to the indication information, the model synchronization period and the model adjustment duration.

5. The method according to claim 2, wherein the model adjustment information comprises a preset moment and an offset duration;
wherein determining the model adjustment moment according to the model adjustment information comprises:
determining the model adjustment moment according to the preset moment and the offset duration.

6. The method according to any one of claims 2 to 5, wherein the model adjustment information further comprises: a reference time mode and/or a model synchronization time accuracy.

7. The method according to any one of claims 2 to 6, wherein the communication system further comprises a third-party management device.

8. The method according to claim 7, wherein the model adjustment information is configured by the first device, the second device, or the third-party management device;
or, the model adjustment information is determined through negotiation by the first device and the second device;
or, the model adjustment information is determined through negotiation by the third-party management device and the first device;
or, the model adjustment information is determined through negotiation by the third-party management device and the second device;
or, the model adjustment information is determined through negotiation by the third-party management device, the first device and the second device.

9. The method according to any one of claims 1 to 8, wherein adjusting the first AI model to the second AI model comprises any one of the following:
deleting the first AI model and adding the second AI model;
replacing the first AI model with the second AI model, or updating or modifying the first AI model to the second AI model;
deactivating the first AI model and activating the second AI model;
disabling the first AI model and enabling the second AI model;
enabling the second AI model;
adding the second AI model;
activating the second AI model.

10. The method according to any one of claims 1 to 9, wherein the method further comprises:
determining, according to an initial transmission moment and the model adjustment moment, the first AI model or the second AI model as a target AI model for processing first data, wherein the initial transmission moment is an initial transmission moment of second data, and the second data is data obtained by the target AI model after processing the first data.

11. The method according to claim 10, wherein determining, according to the initial transmission moment and the model adjustment moment, the first AI model or the second AI model as the target AI model for processing the first data comprises:
if the initial transmission moment is before the model adjustment moment, determining the first AI model as the target AI model;
if the initial transmission moment is after the model adjustment moment, determining the second AI model as the target AI model.

12. The method according to any one of claims 1 to 11, wherein the first device comprises a terminal device or a network device; the second device comprises a terminal device or a network device.

13. The method according to any one of claims 7 to 12, wherein the method further comprises:
receiving the second AI model sent by the second device or the third-party management device, wherein a reception moment of the second AI model is before the model adjustment moment or before a determination moment of the model adjustment moment.

14. The method according to any one of claims 1 to 13, wherein the method further comprises:
sending the second AI model to the second device.

15. A first device, **characterized in that** the first device is applied to a communication system, the communication system further comprises a second device, and the first device comprises a memory, a transceiver and a processor;
the memory is configured to store a computer program;
the transceiver is configured to transceive data under control of the processor;
the processor is configured to read the computer program in the memory and perform the following operations:
determining a model adjustment moment for the first device and the second device to perform model adjustment synchronously;
adjusting a first AI model to a second AI model according to the model adjustment moment.

16. The device according to claim 15, wherein the processor is specifically configured to perform the following operations:
acquiring model adjustment information;
determining the model adjustment moment according to the model adjustment information.

17. The device according to claim 16, wherein the model adjustment information comprises: a model synchronization period and a model adjustment duration; the processor is specifically configured to perform the following operation:
determining the model adjustment moment according to the model synchronization period and the model adjustment duration.

18. The device according to claim 17, wherein the processor is specifically configured to perform the following operations:
acquiring indication information;
determining the model adjustment moment according to the indication information, the model synchronization period and the model adjustment duration.

19. The device according to claim 16, wherein the model adjustment information comprises a preset moment and an offset duration; the processor is specifically configured to perform the following operation:
determining the model adjustment moment according to the preset moment and the offset duration.

20. The device according to any one of claims 16 to 19, wherein the model adjustment information further comprises: a reference time mode and/or a model synchronization time accuracy.

21. The device according to any one of claims 16 to 20, wherein the communication system further comprises a third-party management device.

22. The device according to claim 21, wherein the model adjustment information is configured by the first device, the second device, or the third-party management device;
or, the model adjustment information is determined through negotiation by the first device and the second device;
or, the model adjustment information is determined through negotiation by the third-party management device and the first device;
or, the model adjustment information is determined through negotiation by the third-party management device and the second device;
or, the model adjustment information is determined through negotiation by the third-party management device, the first device and the second device.

23. The device according to any one of claims 15 to 22, wherein the processor is specifically configured to perform any one of the following operations:
deleting the first AI model and adding the second AI model;
replacing the first AI model with the second AI model, or updating or modifying the first AI model to the second AI model;
deactivating the first AI model and activating the second AI model;
disabling the first AI model and enabling the second AI model;
enabling the second AI model;
adding the second AI model;
activating the second AI model.

24. The device according to any one of claims 15 to 23, wherein the processor is further configured to perform the following operation:
determining, according to an initial transmission moment and the model adjustment moment, the first AI model or the second AI model as a target AI model for processing first data, wherein the initial transmission moment is an initial transmission moment of second data, and the second data is data obtained by the target AI model after processing the first data.

25. The device according to claim 24, wherein the processor is specifically configured to perform the following operations:
if the initial transmission moment is before the model adjustment moment, determining the first AI model as the target AI model;
if the initial transmission moment is after the model adjustment moment, determining the second AI model as the target AI model.

26. The device according to any one of claims 15 to 25, wherein the first device comprises a terminal device or a network device; the second device comprises a terminal device or a network device.

27. The device according to any one of claims 21 to 26, wherein the processor is further configured to perform the following operation:
receiving the second AI model sent by the second device or the third-party management device, wherein a reception moment of the second AI model is before the model adjustment moment or before a determination moment of the model adjustment moment.

28. The device according to any one of claims 15 to 27, wherein the processor is further configured to perform the following operation:
sending the second AI model to the second device.

29. A model synchronization apparatus, **characterized in that** the apparatus is applied to a first device in a communication system, the communication system further comprises a second device, and the apparatus comprises:
a first determination unit, configured to determine a model adjustment moment for the first device and the second device to perform model adjustment synchronously;
an adjustment unit, configured to adjust a first AI model to a second AI model according to the model adjustment moment.

30. The apparatus according to claim 29, wherein the first determination unit is specifically configured to:
acquire model adjustment information;
determine the model adjustment moment according to the model adjustment information.

31. The apparatus according to claim 30, wherein the model adjustment information comprises: a model synchronization period and a model adjustment duration; the first determination unit is specifically configured to:
determine the model adjustment moment according to the model synchronization period and the model adjustment duration.

32. The apparatus according to claim 31, wherein the first determination unit is specifically configured to:
acquire indication information;
determine the model adjustment moment according to the indication information, the model synchronization period and the model adjustment duration.

33. The apparatus according to claim 30, wherein the model adjustment information comprises a preset moment and an offset duration; the first determination unit is specifically configured to:
determine the model adjustment moment according to the preset moment and the offset duration.

34. The apparatus according to any one of claims 30 to 33, wherein the model adjustment information further comprises: a reference time mode and/or a model synchronization time accuracy.

35. The apparatus according to any one of claims 30 to 34, wherein the communication system further comprises a third-party management device.

36. The apparatus according to claim 35, wherein the model adjustment information is configured by the first device, the second device, or the third-party management device;
or, the model adjustment information is determined through negotiation by the first device and the second device;
or, the model adjustment information is determined through negotiation by the third-party management device and the first device;
or, the model adjustment information is determined through negotiation by the third-party management device and the second device;
or, the model adjustment information is determined through negotiation by the third-party management device, the first device and the second device.

37. The apparatus according to any one of claims 29 to 36, wherein the adjustment unit is specifically configured to implement any one of the following:
deleting the first AI model and adding the second AI model;
changing, updating or modifying the first AI model to the second AI model;
deactivating the first AI model and activating the second AI model;
disabling the first AI model and enabling the second AI model;
enabling the second AI model;
adding the second AI model;
activating the second AI model.

38. The apparatus according to any one of claims 29 to 37, wherein the apparatus further comprises:
a second determination unit, configured to determine, according to an initial transmission moment and the model adjustment moment, the first AI model or the second AI model as a target AI model for processing first data, wherein the initial transmission moment is an initial transmission moment of second data, and the second data is data obtained by the target AI model after processing the first data.

39. The apparatus according to claim 38, wherein the second determination unit is specifically configured to:
if the initial transmission moment is before the model adjustment moment, determine the first AI model as the target AI model;
if the initial transmission moment is after the model adjustment moment, determine the second AI model as the target AI model.

40. The apparatus according to any one of claims 29 to 39, wherein the first device comprises a terminal device or a network device; the second device comprises a terminal device or a network device.

41. The apparatus according to any one of claims 35 to 40, wherein the apparatus further comprises:
a receiving unit, configured to receive the second AI model sent by the second device or the third-party management device, wherein a reception moment of the second AI model is before the model adjustment moment or before a determination moment of the model adjustment moment.

42. The apparatus according to any one of claims 29 to 41, wherein the apparatus further comprises:
sending the second AI model to the second device.

43. A processor-readable storage medium, **characterized in that** the processor-readable storage medium stores a computer program, and the computer program is used to cause the processor to perform the method according to any one of claims 1 to 14.
